# EUROPEAN PATENT APPLICATION

(11) **EP 4 845 122 A1**
(43) Date of publication of application: **25.11.2026**
(21) Application number: 24926901.0
(22) Date of filing: 20.12.2024
(51) Int. Cl.: H04L 47/52

(54) **PACKET SENDING METHOD, DATA PROCESSOR, COMPUTER DEVICE, AND STORAGE MEDIUM**

(30) Priority: 27.02.2024 CN 202410217748
(71) Applicant: Shenzhen Jaguar Microsystems Co., Ltd., Shenzhen, Guangdong 518100 (CN)
(72) Inventor: LIU, Jingtao, Shenzhen, Guangdong 518100 (CN); HUANG, Kaixin, Shenzhen, Guangdong 518100 (CN); LI, Weihang, Shenzhen, Guangdong 518100 (CN); MAO, Yitao, Shenzhen, Guangdong 518100 (CN); WEI, Fen, Shenzhen, Guangdong 518100 (CN); CHENG, Lang, Shenzhen, Guangdong 518100 (CN); LV, Tao, Shenzhen, Guangdong 518100 (CN)
(74) Representative: HGF
(86) International application number: PCT/CN2024/141006
(87) International publication number: WO 2025/180043

(57) **Abstract**

The present application relates to a packet sending method, a data processing unit, a computer device, a storage medium and a computer program product. The method includes: sending, by the packet processing module, a token event to the algorithm execution module on a condition that a current token count of a to-be-processed data flow is less than a preset threshold value; parsing, by the algorithm execution module, the token event to obtain a flow identifier of the to-be-processed data flow, and inquiring a packet sending rate of the to-be-processed data flow based on the flow identifier; mapping the packet sending rate into a target token count; and returning the target token count to the packet processing module; and updating, by the packet processing module, the current token count based on the target token count and sending a packet corresponding to the to-be-processed data flow based on the current token count.

## Description

### RELATED APPLICATIONS

This application claims priority to Chinese Patent Application No. 2024102177480, entitled "PACKET SENDING METHOD, DATA PROCESSING UNIT, COMPUTER DEVICE AND STORAGE MEDIUM", filed on February 27, 2024, the entire content of which is incorporated herein by reference.

### TECHNICAL FIELD

The present application relates to the field of computer technologies, and in particular, to a packet sending method, a data processing unit, a computer device, a storage medium and a computer program product.

### BACKGROUND

A remote direct memory access (RDMA) network interface card needs to use a congestion control algorithm to detect and alleviate congestion in the network. Currently, the mainstream congestion control algorithm is a data center quantized congestion notification (DCQCN) algorithm. The DCQCN algorithm follows an RP-CP-NP model, a data center includes a data sending server cluster and a data storage server cluster, a network interface card of the data sending server cluster may be referred to as a reaction point (RP), a network interface card of the data storage server cluster may be referred to as a notification point (NP), and a switch between the data sending server cluster and the data storage server cluster may be referred to as a congestion point (CP). For the network interface card of the data sending server cluster, the hardware packet processing and the execution of the DCQCN algorithm can be logically regarded as mutually independent modules, referred to as a packet processing module and an algorithm execution module, respectively.

In the conventional technology, after receiving a congestion notification packet (CNP), the packet processing module reports a CNP event to the algorithm execution module, and the algorithm execution module executes a rate reduction processing logic of the DCQCN algorithm and feeds back a packet sending rate after the rate reduction processing as a response to the packet processing module. In addition, the algorithm execution module takes the situation that "no CNP event is received within a period of time" as a self-triggered event, executes a rate increase processing logic of the DCQCN algorithm after the event is triggered, and feeds back a packet sending rate after the rate increase processing as a response to the packet processing module. After receiving the rate fed back from the algorithm execution module, the packet processing module use this rate to constrain the packet sending behavior of the corresponding flow.

However, feeding back the rate as a response to the packet processing module is prone to abnormal congestion when the response performance of the algorithm execution module experiences jitters.

### SUMMARY

Based on this, various embodiments of the present application provide a packet sending method, a data processing unit, a computer device, a storage medium and a computer program product.

In a first aspect, the present application provides a packet sending method, applied to a data processing unit. The data processing unit includes a packet processing module and an algorithm execution module, and the method includes:
sending, by the packet processing module, a token event to the algorithm execution module on a condition that a current token count of a to-be-processed data flow is less than a preset threshold value;
parsing, by the algorithm execution module, the token event to obtain a flow identifier of the to-be-processed data flow, and inquiring a packet sending rate of the to-be-processed data flow based on the flow identifier; mapping the packet sending rate into a target token count; and returning the target token count to the packet processing module; and
updating, by the packet processing module, the current token count based on the target token count and sending a packet corresponding to the to-be-processed data flow based on the current token count.

In some embodiments, sending the packet corresponding to the to-be-processed data flow based on the current token count includes:
determining whether the current token count is greater than or equal to the preset threshold value;
if the current token count is greater than or equal to the preset threshold value, sending a current to-be-sent packet corresponding to the to-be-processed data flow, and updating the current token count according to a size of the current to-be-sent packet; determining whether the to-be-processed data flow still has any packet to be sent; returning to the step of determining whether the current token count is greater than or equal to the preset threshold value on a condition that the to-be-processed data flow still has a packet to be sent; and on a condition that the to-be-processed data flow has no packet to be sent, scheduling a next data flow of the to-be-processed data flow in a to-be-scheduled flow queue; and
if the current token count is less than the preset threshold value, placing the to-be-processed data flow at a tail of the to-be-scheduled flow queue, and waiting for next scheduling.

In some embodiments, the packet sending method further includes:
updating a single burst packet size according to the size of the current to-be-sent packet; and
on a condition that the to-be-processed data flow is determined to still have a packet to be sent, further determining whether the single burst packet size reaches an upper limit of a single burst number; if the upper limit is not reached, returning to the step of determining whether the current token count is greater than or equal to the preset threshold value; and if the upper limit is reached, scheduling the next data flow of the to-be-processed data flow in the to-be-scheduled flow queue.

In some embodiments, mapping the packet sending rate into the target token count includes:
determining a token request sequence number corresponding to the token event based on a token event timestamp carried in the token event, a preset token base timestamp and a token generation interval;
determining whether the token request sequence number is greater than a token assigning sequence number;
if the token request sequence number is greater than the token assigning sequence number, determining that no tokens are assigned for the token request sequence number, determining the target token count based on the packet sending rate and the token generation interval, and updating the token assigning sequence number based on the token request sequence number; and
if the token request sequence number is less than or equal to the token assigning sequence number, determining that tokens are assigned for the token request sequence number, and taking a preset value as the target token count.

In some embodiments, before mapping the packet sending rate into the target token count, the method further includes:
determining whether the to-be-processed data flow meets a triggering condition of a time-period-based rate increase adjusting mechanism based on a token event timestamp carried in the token event and the flow identifier of the to-be-processed data flow, and if the triggering condition is met, performing rate increase adjustment on the packet sending rate using the time-period-based rate increase adjusting mechanism;
In some embodiments, before mapping the packet sending rate into the target token count, the method further includes:
   determining, based on a token event timestamp carried in the token event and the flow identifier of the to-be-processed data flow, whether the to-be-processed data flow meets a triggering condition of a rate increase adjusting mechanism based on a sent packet size, and if the triggering condition is met, performing rate increase adjustment on the packet sending rate using the rate increase adjusting mechanism based on the sent packet size.

In some embodiments, the triggering condition of the time-period-based rate increase adjusting mechanism is: $M \times T \leq t = ts _ current - ts _ last _ t _ increase \leq \left(M+1\right) \times T ,$
wherein *T* is a preset rate increase time period, *ts*_*current* is the token event timestamp, *ts_last_t_increase* is a timestamp of a last rate increase adjustment performed on the to-be-processed data flow using a first rate increase adjusting mechanism, and *M* is a positive integer.

In some embodiments, performing rate increase adjustment on the packet sending rate using the time-period-based rate increase adjusting mechanism includes:
continuously increasing the packet sending rate M times by using the time-period-based rate increase adjusting mechanism.

In some embodiments, the triggering condition of the rate increase adjusting mechanism based on the sent packet size is: $N \times B \leq b \leq \left(N+1\right) \times B ,$
wherein *B* is a preset rate increase packet size, *b* is a packet size of the to-be-processed data flow sent between the token event timestamp and a timestamp of a last rate increase adjustment performed on the to-be-processed data flow using a second rate increase adjusting mechanism, and *N* is a positive integer.

In some embodiments, performing rate increase adjustment on the packet sending rate using the rate increase adjusting mechanism based on the sent packet size includes:
continuously increasing the packet sending rate N times by using the rate increase adjusting mechanism based on the sent packet size.

In some embodiments, mapping the packet sending rate into the target token count includes:
if the to-be-processed data flow is marked as a starvation mode, determining a token request sequence number corresponding to the token event, and determining whether tokens are assigned for the token request sequence number;
if no tokens are assigned for the token request sequence number, determining whether a packet queue type carried in the token event is a starvation type, and if the packet queue type is not the starvation type, determining a total token count based on the packet sending rate and a token generation interval, determining an assigned token count from the total token count, and taking the assigned token count as the target token count; if the packet queue type is the starvation type, determining the total token count based on the packet sending rate and the token generation interval, taking the total token count as the target token count, and canceling a starvation mode mark of the to-be-processed data flow; and
if tokens are assigned for the token request sequence number, determining whether the packet queue type carried in the token event is the starvation type, and if the packet queue type is not the starvation type, taking a preset value as the target token count; and if the packet queue type is the starvation type, canceling the starvation mode mark of the to-be-processed data flow, determining a reserved token count based on the total token count and the assigned token count, and taking the reserved token count as the target token count.

In some embodiments, the packet sending method further includes:
if the to-be-processed data flow is not marked as the starvation mode, determining the token request sequence number corresponding to the token event, and determining whether tokens are assigned for the token request sequence number;
if no tokens are assigned for the token request sequence number, determining the total token count based on the packet sending rate and the token generation interval, and taking the total token count as the target token count; and
if tokens are assigned for the token request sequence number, determining whether the packet queue type carried in the token event is a queue type that has obtained tokens, and if the packet queue type carried in the token event is the queue type that has obtained tokens, taking the preset value as the target token count; if the packet queue type carried in the token event is not the queue type that has obtained tokens, marking the to-be-processed data flow as the starvation mode, marking the packet queue type carried in the token event as the starvation type, and taking the preset value as the target token count.

In a second aspect, the present application further provides a data processing unit, including:
a packet processing module configured to send a token event to an algorithm execution module on a condition that a current token count of a to-be-processed data flow is less than a preset threshold value; and
the algorithm execution module configured to parse the token event to obtain a flow identifier of the to-be-processed data flow, and inquire a packet sending rate of the to-be-processed data flow based on the flow identifier; map the packet sending rate into a target token count; and return the target token count to the packet processing module,
the packet processing module being further configured to update the current token count based on the target token count and send a packet corresponding to the to-be-processed data flow based on the current token count.

In some embodiments, the packet processing module is specifically configured to: determine whether the current token count is greater than or equal to the preset threshold value; if the current token count is greater than or equal to the preset threshold value, send a current to-be-sent packet corresponding to the to-be-processed data flow, and update the current token count according to a size of the current to-be-sent packet; determine whether the to-be-processed data flow still has any packet to be sent; return to the step of determining whether the current token count is greater than or equal to the preset threshold value on a condition that the to-be-processed data flow still has a packet to be sent; on a condition that the to-be-processed data flow has no packet to be sent, schedule a next data flow of the to-be-processed data flow in a to-be-scheduled flow queue; and if the current token count is less than the preset threshold value, place the to-be-processed data flow at a tail of the to-be-scheduled flow queue, and wait for next scheduling.

In some embodiments, the packet processing module is further configured to: update a single burst packet size according to the size of the current to-be-sent packet; on a condition that the to-be-processed data flow is determined to still have a packet to be sent, further determine whether the single burst packet size reaches an upper limit of a single burst number; if the upper limit is not reached, return to the step of determining whether the current token count is greater than or equal to the preset threshold value; and if the upper limit is reached, schedule the next data flow of the to-be-processed data flow in the to-be-scheduled flow queue.

In some embodiments, the algorithm execution module is specifically configured to: determine a token request sequence number corresponding to the token event based on a token event timestamp carried in the token event, a preset token base timestamp and a token generation interval; determine whether the token request sequence number is greater than a token assigning sequence number; if the token request sequence number is greater than the token assigning sequence number, determine that no tokens are assigned for the token request sequence number, determine the target token count based on the packet sending rate and the token generation interval, and update the token assigning sequence number based on the token request sequence number; and if the token request sequence number is less than or equal to the token assigning sequence number, determine that tokens are assigned for the token request sequence number, and take a preset value as the target token count.

In some embodiments, the algorithm execution module is specifically configured to: determine whether the to-be-processed data flow meets a triggering condition of a time-period-based rate increase adjusting mechanism based on a token event timestamp carried in the token event and the flow identifier of the to-be-processed data flow, and if the triggering condition is met, perform rate increase adjustment on the packet sending rate using the time-period-based rate increase adjusting mechanism; and/or determine, based on a token event timestamp carried in the token event and the flow identifier of the to-be-processed data flow, whether the to-be-processed data flow meets a triggering condition of a rate increase adjusting mechanism based on a sent packet size, and if the triggering condition is met, perform rate increase adjustment on the packet sending rate using the rate increase adjusting mechanism based on the sent packet size.

In some embodiments, the triggering condition of the time-period-based rate increase adjusting mechanism is: $M \times T \leq t = ts _ current - ts _ last _ t _ increase \leq \left(M+1\right) \times T ,$
wherein *T* is a preset rate increase time period, *ts*_*current* is the token event timestamp, *ts_last_t_increase* is a timestamp of a last rate increase adjustment performed on the to-be-processed data flow using a first rate increase adjusting mechanism, and *M* is a positive integer;

The algorithm execution module is specifically configured to: continuously increase the packet sending rate M times by using the time-period-based rate increase adjusting mechanism.

In some embodiments, the triggering condition of the rate increase adjusting mechanism based on the sent packet size is: $N \times B \leq b \leq \left(N+1\right) \times B ,$
wherein *B* is a preset rate increase packet size, *b* is a packet size of the to-be-processed data flow sent between the token event timestamp and a timestamp of a last rate increase adjustment performed on the to-be-processed data flow using a second rate increase adjusting mechanism, and *N* is a positive integer.

The algorithm execution module is specifically configured to: continuously increase the packet sending rate N times by using the rate increase adjusting mechanism based on the sent packet size.

In some embodiments, the algorithm execution module is specifically configured to: if the to-be-processed data flow is marked as a starvation mode, determine a token request sequence number corresponding to the token event, and determine whether tokens are assigned for the token request sequence number; if no tokens are assigned for the token request sequence number, determine whether a packet queue type carried in the token event is a starvation type, and if the packet queue type is not the starvation type, determine a total token count based on the packet sending rate and a token generation interval, determine an assigned token count from the total token count, and take the assigned token count as the target token count; if the packet queue type is the starvation type, determine the total token count based on the packet sending rate and the token generation interval, take the total token count as the target token count, and cancel a starvation mode mark of the to-be-processed data flow; if tokens are assigned for the token request sequence number, determine whether the packet queue type carried in the token event is the starvation type, and if the packet queue type is not the starvation type, take a preset value as the target token count; and if the packet queue type is the starvation type, cancel the starvation mode mark of the to-be-processed data flow, determine a reserved token count based on the total token count and the assigned token count, and take the reserved token count as the target token count.

In some embodiments, the algorithm execution module is specifically configured to: if the to-be-processed data flow is not marked as the starvation mode, determine the token request sequence number corresponding to the token event, and determine whether tokens are assigned for the token request sequence number; if no tokens are assigned for the token request sequence number, determine the total token count based on the packet sending rate and the token generation interval, and take the total token count as the target token count; if tokens are assigned for the token request sequence number, determine whether the packet queue type carried in the token event is a queue type that has obtained tokens, and if the packet queue type carried in the token event is the queue type that has obtained tokens, take the preset value as the target token count; if the packet queue type carried in the token event is not the queue type that has obtained tokens, mark the to-be-processed data flow as the starvation mode, mark the packet queue type carried in the token event as the starvation type, and take the preset value as the target token count.

In a third aspect, the present application further provides a computer device including the data processing unit in the second aspect.

In a fourth aspect, the present application further provides a computer-readable storage medium having a computer program stored thereon. The computer program, when executed by a processor, implements the following steps:
sending, by the packet processing module, a token event to the algorithm execution module on a condition that a current token count of a to-be-processed data flow is less than a preset threshold value;
parsing, by the algorithm execution module, the token event to obtain a flow identifier of the to-be-processed data flow, and inquiring a packet sending rate of the to-be-processed data flow based on the flow identifier; mapping the packet sending rate into a target token count; and returning the target token count to the packet processing module; and
updating, by the packet processing module, the current token count based on the target token count and sending a packet corresponding to the to-be-processed data flow based on the current token count.

In a fifth aspect, the present application further provides a computer program product including a computer program which, when executed by a processor, implements the following steps:
sending, by the packet processing module, a token event to the algorithm execution module on a condition that a current token count of a to-be-processed data flow is less than a preset threshold value;
parsing, by the algorithm execution module, the token event to obtain a flow identifier of the to-be-processed data flow, and inquiring a packet sending rate of the to-be-processed data flow based on the flow identifier; mapping the packet sending rate into a target token count; and returning the target token count to the packet processing module; and
updating. by the packet processing module, the current token count based on the target token count and sending a packet corresponding to the to-be-processed data flow based on the current token count.

Details of one or more embodiments of the present application are set forth in the accompanying drawings and the description below. Other features, objects, and advantages of the present application will become more apparent from the description, the accompanying drawings, and the claims.

### BRIEF DESCRIPTION OF THE DRAWINGS

In order to describe the technical solutions of the embodiments of the present application or the conventional art more clearly, the accompanying drawings required for describing the embodiments or for describing the conventional art will be briefly introduced as follows. Apparently, the accompanying drawings, in the following description, illustrate merely some embodiments of the present application, and for a person of ordinary skill in the art, other drawings can also be obtained according to these disclosed accompanying drawings without making any creative efforts.
FIG. 1 is a schematic flow diagram of a packet sending method according to an embodiment.
FIG. 2 is a schematic flow diagram of the packet sending method according to another embodiment.
FIG. 3 is a schematic work flow diagram of a packet processing module based on a token count in an embodiment.
FIG. 4 is a schematic flow diagram of a token assigning mechanism of an algorithm execution module in an embodiment.
FIG. 5 is a schematic flow diagram of an anti-starvation processing mechanism of the algorithm execution module in an embodiment.
FIG. 6 is a structural block diagram of a data processing unit according to an embodiment.
FIG. 7 is a diagram of an internal structure of a computer device according to an embodiment.

### DETAILED DESCRIPTION OF THE EMBODIMENTS

The technical solutions in the embodiments of the present application are clearly and completely described with reference to the accompanying drawings in the embodiments of the present application. Apparently, the described embodiments are a part of but not all of the embodiments of the present application. All other embodiments obtained by a person of ordinary skill in the art based on the embodiments of the present application without creative efforts shall fall within the protection scope of the present application.

For an RDMA network interface card, a current mainstream congestion control algorithm is a DCQCN algorithm. The DCQCN algorithm follows an RP-CP-NP model, and for a network interface card on a RP side, an algorithm execution module generally feeds back a rate as a response to a packet processing module, and the packet processing module use this rate to constrain the packet sending behavior of the corresponding flow after receiving the rate fed back from the algorithm execution module. This manner easily causes abnormal congestion during jitters of the response performance of the algorithm execution module. Therefore, the present application provides a packet sending method, which improves the DCQCN algorithm, and can be applied to the network interface card on the RP side, the algorithm execution module not directly feeds back the rate to the packet processing module, but maps the rate into a token count and feeds back the token count to the packet processing module, and the packet processing module constrains the packet sending behavior of the corresponding flow with the token count. The abnormal congestion caused by the situation that the algorithm execution module, after receiving a CNP event, cannot promptly feed back the packet sending rate after rate reduction processing to the packet processing module when the running performance of the rate reduction processing logic jitters, while the packet processing module still sends packets at a high rate can be avoided. The packet sending method according to the present application is described in detail below with reference to specific embodiments.

As described above, the packet sending method according to the present application may be applied to a data processing unit on the RP side, and the data processing unit on the RP side may be an RDMA data processing unit or other data processing units capable of supporting implementation of the packet sending method according to the present application, which is not limited in embodiments of the present application. The data processing unit (DPU) according to the present application may be a network interface card, an intelligent network interface card, a chip, or the like.

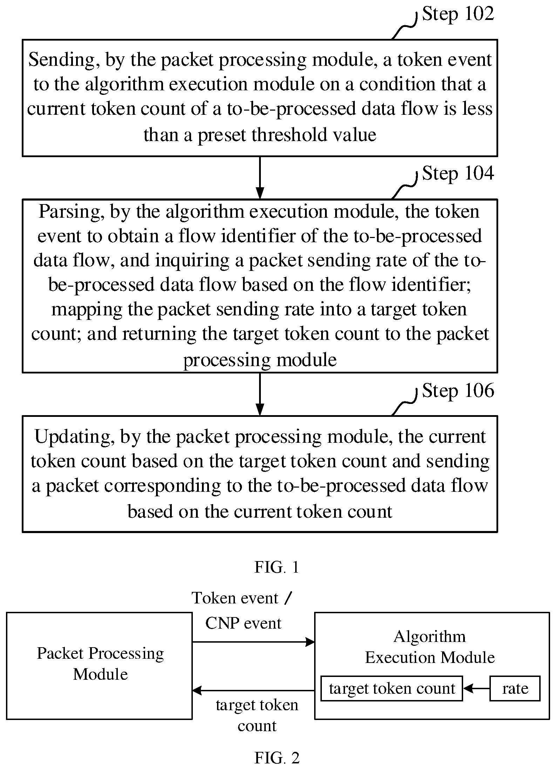

In an exemplary embodiment, as shown in FIG. 1, a packet sending method is provided, the description is given with the method applied to an RDMA data processing unit as an example, hardware packet processing and execution of a DCQCN algorithm in the RDMA data processing unit may be logically regarded as modules independent of each other, and may be referred to as a packet processing module and an algorithm execution module respectively. The packet sending method according to the embodiment of the present application includes the following step 102 to step 106.

Step 102, the packet processing module sends a token event to the algorithm execution module on a condition that a current token count of a to-be-processed data flow is less than a preset threshold value.

Optionally, the to-be-processed data flow in the embodiment of the present application is an active flow, and the active flow is a flow that has a packet to be sent. All active flows needing to be processed by the packet processing module are stored in a to-be-scheduled active flow queue, the packet processing module schedules the active flows in the queue in sequence according to a sequence from a head of the queue to a tail of the queue, and after the packet processing module schedules one active flow, the active flow can be used as the to-be-processed data flow.

The packet processing module can maintain one token count for each active flow, and after scheduling one active flow, the packet processing module takes the active flow as the to-be-processed data flow, and can inquire the current token count of the to-be-processed data flow, determine whether the current token count of the to-be-processed data flow is less than a preset threshold, and if the current token count of the to-be-processed data flow is less than the preset threshold, acquire a timestamp at a current moment, take the timestamp as a token event timestamp, generate the token event based on the token event timestamp, a flow identifier of the to-be-processed data flow, a packet queue type of the to-be-processed data flow, or the like, and send the token event to the algorithm execution module.

The packet queue type of the to-be-processed data flow may be a data sending queue (data_send queue, SQ) or a data response queue (data_response queue, RQ).

As described above, the packet processing module sends the token event to the algorithm execution module on a condition that the current token count of the to-be-processed data flow is less than the preset threshold; on a condition that the current token count of the to-be-processed data flow is greater than or equal to the preset threshold, the packet processing module can send a current to-be-sent packet corresponding to the to-be-processed data flow, update the current token count and a single burst packet size according to a size of the current to-be-sent packet, determine whether the to-be-processed data flow still has any packet to be sent, and on a condition that the to-be-processed data flow still has a packet to be sent, further determine whether the single burst packet size reaches an upper limit of a single burst number; if the upper limit is not reached, the packet processing module returns to the step of determining whether the current token count is greater than or equal to the preset threshold value; if the upper limit is reached or on a condition that the to-be-processed data flow has no packet to be sent, the packet processing module schedules a next active flow of the to-be-processed data flow in the to-be-scheduled active flow queue, and in the embodiment of the present application, the to-be-scheduled active flow queue is also referred to as a to-be-scheduled flow queue, and the active flow in the to-be-scheduled flow queue is also referred to as a data flow.

The preset threshold value may be flexibly set according to actual situations, and exemplarily may be set to a size of 1 maximum transition unit (MTU), for example, 1KB. The token count in the embodiment of the present application may be understood as a token byte number.

step 104, the algorithm execution module parses the token event to obtain the flow identifier of the to-be-processed data flow, and inquires a packet sending rate of the to-be-processed data flow based on the flow identifier; maps the packet sending rate into a target token count; and returns the target token count to the packet processing module.

After receiving the token event, the algorithm execution module can parse the token event to obtain the flow identifier of the to-be-processed data flow and the token event timestamp. The algorithm execution module can inquire the packet sending rate of the to-be-processed data flow based on the flow identifier of the to-be-processed data flow, and determine whether the packet sending rate needs to be increased based on the flow identifier of the to-be-processed data flow and the token event timestamp.

If the packet sending rate does not need to be increased, the algorithm execution module maps the packet sending rate into the target token count, and returns the target token count to the packet processing module. If the packet sending rate needs to be increased, the algorithm execution module increases the packet sending rate, maps the increased packet sending rate into the target token count, and returns the target token count to the packet processing module.

It should be noted that, after receiving the CNP of the to-be-processed data flow, the packet processing module may report one CNP event to the algorithm execution module, and after receiving the CNP event, the algorithm execution module may reduce the packet sending rate of the to-be-processed data flow. That is, with arrival of the token event of the to-be-processed data flow or arrival of the CNP event of the to-be-processed data flow, the algorithm execution module may update the packet sending rate of the to-be-processed data flow, and mapping is performed on the latest packet sending rate to obtain the target token count.

Step 106, the packet processing module updates the current token count based on the target token count and sends a packet corresponding to the to-be-processed data flow based on the current token count.

After receiving the target token count, the packet processing module adds the target token count to the current token count of the to-be-processed data flow, so as to update the current token count, and sends the packet corresponding to the to-be-processed data flow based on the current token count after updating.

Optionally, the to-be-processed data flow may have N packets to be sent, the N packets have a sending sequence, and the packet processing module may send the packets according to the sequence until all the N packets are sent. The packet processing module sends each packet to a switch, and sends the packet to a data processing unit on an NP side through the switch. After receiving the packet, the switch executes an explicit congestion notification (ECN) marking mechanism, and after receiving the packet sent by the switch, the data processing unit on the NP side executes a CNP reporting mechanism, reference may be made to an existing DCQCN algorithm for details of the two mechanisms, which are not repeated herein.

Referring to FIG. 2, in the packet sending method according to the embodiment of the present application, the whole process is roughly as follows: the packet processing module sends the token event to the algorithm execution module on a condition that the current token count of the to-be-processed data flow is insufficient; the algorithm execution module determines whether the packet sending rate of the to-be-processed data flow needs to be increased after receiving the token event, and if the packet sending rate of the to-be-processed data flow needs to be increased, increases the packet sending rate, maps the increased packet sending rate into the target token count and returns the target token count to the packet processing module. After receiving the CNP of the to-be-processed data flow, the packet processing module may report the CNP event to the algorithm execution module. After receiving the CNP event, the algorithm execution module may reduce the packet sending rate of the to-be-processed data flow.

In the above embodiment, the packet processing module sends the token event to the algorithm execution module on a condition that the current token count of the to-be-processed data flow is less than the preset threshold value; the algorithm execution module parses the token event to obtain the flow identifier of the to-be-processed data flow, inquires the packet sending rate of the to-be-processed data flow based on the flow identifier, maps the packet sending rate into the target token count, and returns the target token count to the packet processing module; and the packet processing module updates the current token count based on the target token count and sends the packet corresponding to the to-be-processed data flow based on the current token count. The algorithm execution module does not directly feed back the rate to the packet processing module, but maps the rate into the token count and feeds back the token count to the packet processing module, and the packet processing module constrains the packet sending behavior of the corresponding flow with the token count; abnormal congestion caused by jitters of the response performance of the algorithm execution module can be avoided, for example, after the algorithm execution module receives the CNP event, the running performance of the speed reduction processing logic jitters, the reduced packet sending rate cannot be fed back to the packet processing module in time, while the packet processing module still sends the packet at a high rate, which may cause network congestion, and the token mechanism in the present application can avoid the congestion.

In some embodiments, after updating the current token count, the packet processing module may send the packet corresponding to the to-be-processed data flow in the following manner, that is, the implementation of sending the packet corresponding to the to-be-processed data flow based on the current token count includes the following steps:
determining whether the current token count is greater than or equal to the preset threshold value; if the current token count is greater than or equal to the preset threshold value, sending a current to-be-sent packet corresponding to the to-be-processed data flow, and updating the current token count according to a size of the current to-be-sent packet; determining whether the to-be-processed data flow still has any packet to be sent; returning to the step of determining whether the current token count is greater than or equal to the preset threshold value on a condition that the to-be-processed data flow still has a packet to be sent; and on a condition that the to-be-processed data flow has no packet to be sent, scheduling a next data flow of the to-be-processed data flow in a to-be-scheduled flow queue; and if the current token count is less than the preset threshold value, placing the to-be-processed data flow at a tail of the to-be-scheduled flow queue, and waiting for next scheduling.

As described above, the to-be-processed data flow may have N packets to be sent, the N packets have a sending sequence, and if M packets are already sent, the (M+1)th packet in the N packets may be used as the current to-be-sent packet.

After the current to-be-sent packet corresponding to the to-be-processed data flow is sent, the size of the current to-be-sent packet can be subtracted from the current token count to update the current token count.

In some embodiments, after the current to-be-sent packet corresponding to the to-be-processed data flow is sent, in addition to updating of the current token count according to the size of the current to-be-sent packet, the single burst packet size may be updated according to the size of the current to-be-sent packet, and then, whether the to-be-processed data flow still has any packet to be sent is determined, and if the to-be-processed data flow still has a packet to be sent, whether the single burst packet size reaches the upper limit of the single burst number is further determined; if the upper limit is not reached, the step of determining whether the current token count is greater than or equal to the preset threshold value is returned; and if the upper limit is reached, the next data flow of the to-be-processed data flow in the to-be-scheduled flow queue is scheduled.

After the current to-be-sent packet corresponding to the to-be-processed data flow is sent, the size of the current to-be-sent packet can be added to the single burst packet size to update the single burst packet size.

The packet processing module can determine whether sending of the N packets is completed on a condition that the N packets need to be sent for the to-be-processed data flow, and if the N packets have not been sent, determine that the to-be-processed data flow still has a packet to be sent.

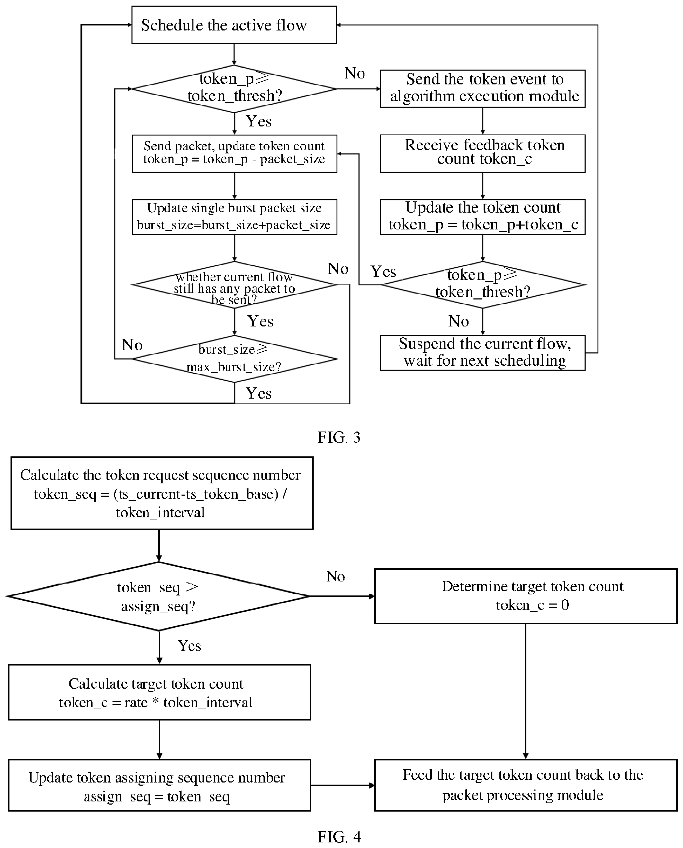

Exemplarily, FIG. 3 shows a schematic work flow diagram of the packet processing module based on the token count. The packet processing module schedules the active flow from the to-be-scheduled active flow queue, takes the active flow as the to-be-processed data flow, determines whether the current token count token_p of the to-be-processed data flow is greater than or equal to the preset threshold token_thresh, and if the current token count token_p of the to-be-processed data flow is greater than or equal to the preset threshold token_thresh, sends the current to-be-sent packet corresponding to the to-be-processed data flow, and subtracts the size packet_size of the current to-be-sent packet from the current token count token_p, so as to update the current token count; and then, adds the size packet_size of the current to-be-sent packet to the single burst packet size burst_size, so as to update the single burst packet size. Then, the packet processing module determines whether the current flow (to-be-processed data flow) still has any packet to be sent, and if the current flow still has a packet to be sent, further determines whether the single burst packet size burst_size reaches the upper limit max_burst_size of the single burst number, and if the upper limit is not reached, returns to the step of determining whether the current token count token_p of the to-be-processed data flow is greater than or equal to the preset threshold token_thresh; and if the upper limit is reached or on a condition that the current flow has no packet to be sent, schedules the next active flow. On a condition that the current token count token_p of the to-be-processed data flow is less than the preset threshold token_thresh, the packet processing module sends the token event to the algorithm execution module, the algorithm execution module feeds back the target token count token_c to the packet processing module, and the packet processing module adds the target token count token_c to the current token count token_p of the to-be-processed data flow after receiving the target token count token_c, so as to update the current token count, determines whether the current token count token_p of the to-be-processed data flow is greater than or equal to the preset threshold token_thresh, and if the current token count token_p of the to-be-processed data flow is greater than or equal to the preset threshold token_thresh, skips to the step of sending the current to-be-sent packet, and if the current token count token_p of the to-be-processed data flow is less than the preset threshold token_thresh, suspends the current flow and waits for next scheduling.

In the above embodiment, a specific logic through which the packet processing module sends the packet based on the token count is provided, calculations related to the logic include updating of the current token count and updating of the single burst packet size, and the updating is simple addition and subtraction operation. In the prior art, when the packet processing module sends the packet based on the rate fed back from the algorithm execution module, complex multiplication and division operation is required. In contrast, the method according to the embodiment of the present application realizes simple hardware implementation, has high scalability, is not prone to an error, and has good stability.

In some embodiments, the algorithm execution module may map the packet sending rate to the target token count by: determining a token request sequence number corresponding to the token event based on a token event timestamp carried in the token event, a preset token base timestamp and a token generation interval; determining whether the token request sequence number is greater than a token assigning sequence number; if the token request sequence number is greater than the token assigning sequence number, determining that no tokens are assigned for the token request sequence number, determining the target token count based on the packet sending rate and the token generation interval, and updating the token assigning sequence number based on the token request sequence number; and if the token request sequence number is less than or equal to the token assigning sequence number, determining that tokens are assigned for the token request sequence number, and taking a preset value as the target token count.

The token generation interval is a user configurable parameter.

The algorithm execution module can calculate the token request sequence number corresponding to the token event by using the following formula: $token _ seq = \left(ts_current-ts_token_base\right) / token _ interval ,$
wherein *token_seq* represents the token request sequence number corresponding to the token event, *ts_current* represents the token event timestamp, *ts_token_base* represents the token base timestamp, and *token_interval* represents the token generation interval. It should be noted that when a result of the division operation in the above formula is a decimal, an integer part of the decimal is taken as the token request sequence number corresponding to the token event.

Optionally, the algorithm execution module may determine the target token count using the following formula: $token _ c = rate ∗ token _ interval ,$
wherein *token_c* represents the target token count, *rate* represents the packet sending rate, and *token_interval* represents the token generation interval.

Optionally, the algorithm execution module may also determine the target token count using the following formula: $token _ c = rate ∗ \left(ts_current-ts_last\right) ,$
wherein *token_c* represents the target token count, *rate* represents the packet sending rate, *ts_current* represents the token event timestamp, and *ts_last* represents the token event timestamp carried in the last received token event of the to-be-processed data flow.

The preset value may be flexibly set according to actual conditions, and exemplarily, the preset value may be 0.

Exemplarily, FIG. 4 shows a schematic flow diagram of the token assigning mechanism of the algorithm execution module. The algorithm execution module calculates the token request sequence number token _seq corresponding to the token event, then determines whether the token request sequence number token _seq is greater than the token assigning sequence number assign_seq, and if the token request sequence number token _seq is less than or equal to the token assigning sequence number assign_seq, calculates the target token count token_c through the above formula, takes the token request sequence number token_seq as the new token assigning sequence number assign_seq, so as to update the token assigning sequence number assign_seq, and further feeds the target token count token_c back to the packet processing module; and if the token request sequence number token_seq is greater than the token assigning sequence number assign_seq, determines that the target token count token_c is 0, and feeds the target token count token_c back to the packet processing module.

Exemplarily, assuming that in the token event of the to-be-processed data flow received by the algorithm execution module last time, the token event timestamp is 1s and the token generation interval is 10s, the token request sequence number token_seq corresponding to the token event may be calculated to be 0 through the above formula, and after the token assigning sequence number assign_seq is updated, the token assigning sequence number assign_seq is 0. Assuming that in the token event of the to-be-processed data flow received by the algorithm execution module this time, the token event timestamp is 5s, the token request sequence number token_seq corresponding to the token event may also be calculated to be 0 through the above formula, and since the token request sequence number is equal to the token assigning sequence number assign_seq, the target token count token_c is determined to be 0, and the target token count token_c is fed back to the packet processing module, that is, no token is assigned for the token event.

In the above embodiment, after receiving the token event, the algorithm execution module calculates the token request sequence number corresponding to the token event, determines whether tokens are assigned for the token request sequence number, and if no tokens are assigned for the token request sequence number, assigns all the tokens at one time, that is, takes a product of the packet sending rate and the token generation interval as the target token count; and if tokens are assigned for the token request sequence number, does not assign the tokens for the token event. The manner for controlling the token assigning number in a short time can prevent the network congestion caused by the packet processing module obtaining excessive tokens in a short time to send the packet.

In some embodiments, before mapping the packet sending rate into the target token count, the method further includes: determining whether the to-be-processed data flow meets a triggering condition of a time-period-based rate increase adjusting mechanism based on a token event timestamp carried in the token event and the flow identifier of the to-be-processed data flow, and if the triggering condition is met, performing rate increase adjustment on the packet sending rate using the time-period-based rate increase adjusting mechanism; and/or determining, based on a token event timestamp carried in the token event and the flow identifier of the to-be-processed data flow, whether the to-be-processed data flow meets a triggering condition of a rate increase adjusting mechanism based on a sent packet size, and if the triggering condition is met, performing rate increase adjustment on the packet sending rate using the rate increase adjusting mechanism based on the sent packet size.

The algorithm execution module can use the token event as an implicit rate increase signal, and after receiving the token event, on the one hand, inquire the packet sending rate of the to-be-processed data flow based on the flow identifier of the to-be-processed data flow, and on the other hand, determine whether the packet sending rate needs to be increased based on the flow identifier of the to-be-processed data flow and the token event timestamp.

Optionally, rate increase adjustment that can be performed by the algorithm execution module includes two mechanisms: the rate increase adjusting mechanism based on the time period and the rate increase adjusting mechanism based on the sent packet size.

Optionally, after receiving the token event, the algorithm execution module, on the one hand, can determine whether the to-be-processed data flow meets the triggering condition of the time-period-based rate increase adjusting mechanism based on the token event timestamp carried in the token event and the flow identifier of the to-be-processed data flow, and if the triggering condition of the time-period-based rate increase adjusting mechanism is met, perform rate increase adjustment on the packet sending rate using the time-period-based rate increase adjusting mechanism; on the other hand, can determine whether the to-be-processed data flow meets the triggering condition of the rate increase adjusting mechanism based on the sent packet size based on the token event timestamp carried in the token event and the flow identifier of the to-be-processed data flow, and if the triggering condition of the rate increase adjusting mechanism based on the sent packet size is met, perform rate increase adjustment on the packet sending rate using the rate increase adjusting mechanism based on the sent packet size. Alternatively, the algorithm execution module executes one of the above two logics, which is not limited in the embodiment of the present application.

In the above embodiment, after receiving the token event, the algorithm execution module takes the token event as the implicit rate increase signal, further determines whether the packet sending rate really needs to be increased based on the flow identifier of the to-be-processed data flow and the token event timestamp, and if it is determined that the rate increase adjustment needs to be performed, increases the packet sending rate of the to-be-processed data flow. Compared with the prior art in which the algorithm execution module takes the situation that "no CNP event is received within a period of time" as a self-triggered event, and executes a rate increase processing logic of the DCQCN algorithm after the event is triggered, in the present application, the algorithm execution module relies on an event report triggering algorithm calculation logic of the packet processing module, an interface is simple, and implementation is convenient. An algorithm core of the algorithm execution module does not need to have a timestamp timer and a complex task scheduling capability, an implementation cost is lower, and scalability is better.

The triggering condition of the rate increase adjusting mechanism based on the time period may be: $ts _ current - ts _ last _ t _ increase \geq T ,$
wherein *T* is the preset rate increase time period, *ts*_*current* is the token event timestamp, and *ts_last_t_increase* is a timestamp of the last rate increase adjustment performed on the to-be-processed data flow using the rate increase adjusting mechanism based on the time period.

One possible situation is as follows: a plurality of preset rate increase time periods may exist between the token event timestamp carried in the token event and the timestamp of the last rate increase adjustment performed on the to-be-processed data flow using the rate increase adjusting mechanism based on the time period, and therefore, the triggering condition of the rate increase adjusting mechanism based on the time period may be: $M \times T \leq t = ts _ current - ts _ last _ t _ increase \leq \left(M+1\right) \times T ,$
wherein *M* is a positive integer. Under the above situation, since a duration between the two timestamps is greater than or equal to the M preset rate increase time periods *T*, the algorithm execution module can continuously increase the packet sending rate M times by using the rate increase adjusting mechanism based on the time period, that is, continuously increase the rate M times.

The triggering condition of the rate increase adjusting mechanism based on the sent packet size may be: $b \geq B ,$
wherein *B* is a preset rate increase packet size, and b is a packet size of the to-be-processed data flow sent between the token event timestamp and a timestamp of the last rate increase adjustment performed on the to-be-processed data flow using the rate increase adjusting mechanism based on the sent packet size.

One possible situation is as follows: the packet size of the to-be-processed data flow sent between the token event timestamp carried in the token event and the timestamp of the last rate increase adjustment performed on the to-be-processed data flow using the rate increase adjusting mechanism based on the sent packet size may be several times the preset rate increase packet size, and therefore, the adjustment triggering condition corresponding to the rate increase adjusting mechanism based on the sent packet size may be: $N \times B \leq b \leq \left(N+1\right) \times B ,$
wherein N is a positive integer. Under the above situation, since the packet size of the to-be-processed data flow sent between the two timestamps is greater than or equal to the N preset rate increase packet sizes, the algorithm execution module may continuously increase the packet sending rate N times by using the rate increase adjusting mechanism based on the sent packet size, that is, continuously increase the rate N times.

In the above embodiment, the triggering condition of the rate increase adjusting mechanism based on the time period and the triggering condition of the rate increase adjusting mechanism based on the sent packet size are provided, and compared with the self-triggered condition that "no CNP event is received within a period of time" in the prior art, the algorithm core of the algorithm execution module does not need to have a timestamp timer and a complex task scheduling capability, the implementation cost is lower, and the scalability is better.

The token event sent to the algorithm execution module by the packet processing module not only carries the flow identifier of the to-be-processed data flow and the token event timestamp, but also carries the packet queue type of the to-be-processed data flow, and the packet queue type of the to-be-processed data flow may be the SQ or the RQ, and scheduling is performed for each of the two types. The SQ and RQ may generate a starvation phenomenon due to a special scheduling mode of hardware, for example, during each scheduling, the SQ takes all tokens, and the RQ cannot obtain tokens, so that a flow with the packet queue type being the RQ cannot send the packet. In order to solve the starvation phenomenon, the embodiment of the present application provides the solution that the following logic may be used to map the packet sending rate into the target token count.

In some embodiments, whether the to-be-processed data flow is marked as a starvation mode is determined first, and if the to-be-processed data flow is marked as the starvation mode, the token request sequence number corresponding to the token event is determined, and whether tokens are assigned for the token request sequence number is determined; if no tokens are assigned for the token request sequence number, whether the packet queue type carried in the token event is the starvation type is determined, and if the packet queue type is not the starvation type, a total token count is determined based on the packet sending rate and the token generation interval, an assigned token count is determined from the total token count, and the assigned token count is taken as the target token count; if the packet queue type is the starvation type, the total token count is determined based on the packet sending rate and the token generation interval, the total token count is taken as the target token count, and a starvation mode mark of the to-be-processed data flow is canceled; if tokens are assigned for the token request sequence number, whether the packet queue type carried in the token event is the starvation type is determined, and if the packet queue type is not the starvation type, the preset value is taken as the target token count; and if the packet queue type is the starvation type, the starvation mode mark of the to-be-processed data flow is canceled, a reserved token count is determined based on the total token count and the assigned token count, and the reserved token count is taken as the target token count.

The algorithm execution module may use the formula provided in the above embodiment to calculate the token request sequence number corresponding to the token event, and after obtaining the token request sequence number, determine whether the token request sequence number is greater than the token assigning sequence number, and if the token request sequence number is greater than the token assigning sequence number, determine that no tokens are assigned for the token request sequence number, and if the token request sequence number is less than or equal to the token assigning sequence number, determine that tokens are assigned for the token request sequence number.

The starvation type is changed correspondingly with continuous arrival of the token events, and on a condition that no tokens are assigned for the token request sequence number, whether the packet queue type carried in the token event is consistent with the current starvation type can be determined, and if the packet queue type carried in the token event is inconsistent with the current starvation type, the packet queue type carried in the token event is not the starvation type, and if the packet queue type carried in the token event is consistent with the current starvation type, the packet queue type carried in the token event is the starvation type.

When it is determined that no tokens are assigned for the token request sequence number and the packet queue type carried in the token event is not the starvation type, the algorithm execution module may determine the target token count by using the following formula: $token _ c = rate ∗ token _ interval / 2 ,$
wherein *token*_*c* represents the target token count, *rate* represents the packet sending rate, *token_interval* represents the token generation interval, and *rate* ∗ *token_interval* represents the total token count, that is, half of the total token count is used as the target token count, and the rest number is used as the reserved token count.

When it is determined that no tokens are assigned for the token request sequence number and the packet queue type carried in the token event is the starvation type, the algorithm execution module may determine the target token count by using the following formula: $token _ c = rate ∗ token _ interval ,$
wherein *token_c* represents the target token count, *rate* represents the packet sending rate, and *token_interval* represents the token generation interval, that is, the total token count is used as the target token count.

On a condition that tokens are determined to be assigned for the token request sequence number, whether the packet queue type carried in the token event is the starvation type is still determined, and if the packet queue type is not the starvation type, the target token count can be determined to be 0, and no tokens are assigned; if the packet queue type is the starvation type, the starvation mode mark of the to-be-processed data flow is canceled, and the reserved token count is taken as the target token count. In combination with the description of the above embodiments, the reserved token count is obtained by subtracting the assigned token count from the total token count.

In some embodiments, if the to-be-processed data flow is not marked as the starvation mode, the token request sequence number corresponding to the token event is determined, and whether tokens are assigned for the token request sequence number is determined; if no tokens are assigned for the token request sequence number, the total token count is determined based on the packet sending rate and the token generation interval, and the total token count is taken as the target token count; if tokens are assigned for the token request sequence number, whether the packet queue type carried in the token event is a queue type that has obtained tokens is determined, and if the packet queue type carried in the token event is the queue type that has obtained tokens, the preset value is taken as the target token count; if the packet queue type carried in the token event is not the queue type that has obtained tokens, the to-be-processed data flow is marked as the starvation mode, the packet queue type carried in the token event is marked as the starvation type, and the preset value is taken as the target token count.

Similarly, on a condition that the to-be-processed data flow is not marked as the starvation mode, the algorithm execution module may use the formula provided in the above embodiment to calculate the token request sequence number corresponding to the token event, and after obtaining the token request sequence number, determine whether the token request sequence number is greater than the token assigning sequence number, and if the token request sequence number is greater than the token assigning sequence number, determine that no tokens are assigned for the token request sequence number, and if the token request sequence number is less than or equal to the token assigning sequence number, determine that tokens are assigned for the token request sequence number.

When it is determined that no tokens are assigned for the token request sequence number, the algorithm execution module may determine the target token count by using the following formula: $token _ c = rate ∗ token _ interval ,$
wherein *token_c* represents the target token count, *rate* represents the packet sending rate, and *token_interval* represents the token generation interval, that is, the total token count is used as the target token count.

On a condition that the token is determined to be assigned for the token request sequence number, whether the packet queue type in the token event corresponding to the assigned token is consistent with the packet event type in the current token event is further determined, and if the packet queue type in the token event corresponding to the assigned token is consistent with the packet event type in the current token event, the packet queue type carried in the token event is the queue type that has obtained tokens, and the target token count is determined to be 0; if the packet queue type in the token event corresponding to the assigned token is inconsistent with the packet event type in the current token event, the packet queue type carried in the token event is not the queue type that has obtained tokens, the to-be-processed data flow is marked as the starvation mode, the packet queue type carried in the token event is marked as the starvation type, and the target token count is determined to be 0.

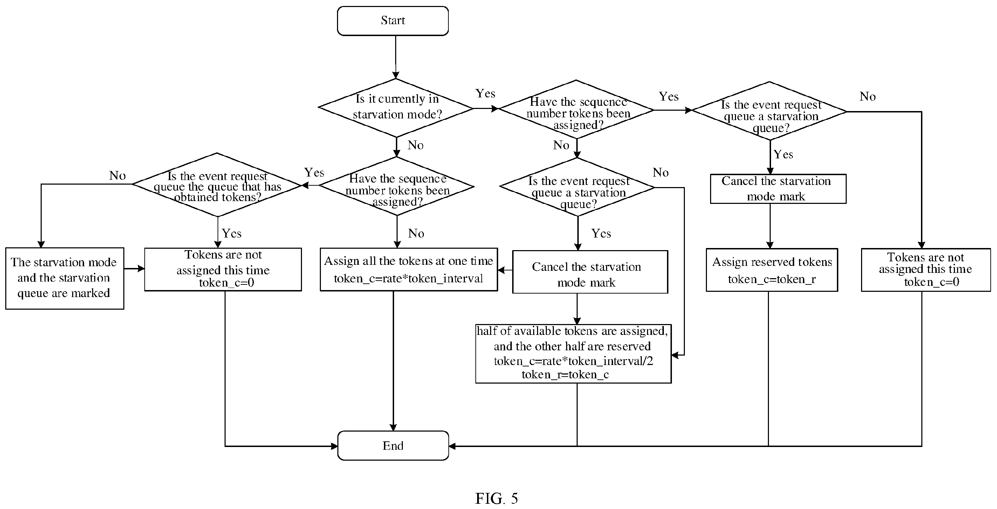

Exemplarily, FIG. 5 shows a schematic flow diagram of an anti-starvation processing mechanism of the algorithm execution module. After receiving the token event, the algorithm execution module parses the token event to obtain the flow identifier of the to-be-processed data flow, and inquires the packet sending rate of the to-be-processed data flow based on the flow identifier; based on the logic of the foregoing embodiment, determines whether the packet sending rate needs to be increased, and if the packet sending rate needs to be increased, increases the packet sending rate (for a detailed process, reference is made to the description of the foregoing embodiment, and details are not repeated here), and after the rate increase adjustment, executes the anti-starvation processing mechanism shown in FIG. 5; if the packet sending rate does not need to be increased, directly executes the anti-starvation processing mechanism shown in FIG. 5. Referring to FIG. 5, first, whether the to-be-processed data flow is currently marked as the starvation mode is determined; if the to-be-processed data flow is currently marked as the starvation mode, whether the tokens are assigned for the token request sequence number corresponding to the token event is determined; if no tokens are assigned for the token request sequence number corresponding to the token event, whether the event request queue is a starvation queue is determined, that is, whether the packet queue type carried in the token event is the starvation type is determined; if the packet queue type is not the starvation type, half of available tokens are assigned, and the other half of the available tokens are reserved, that is, *token_c* = *rate* ∗ *token_interval*/2 is taken as the target token count, and *token_r* is taken as the reserved token count; if the type is the starvation type, all the tokens are assigned at one time, that is, *token_r* = *rate* ∗ *token_interval* is taken as the target token count, and the starvation mode mark of the to-be-processed data flow is canceled; if the tokens are assigned, whether the event request queue is the starvation queue is determined; if the type is the starvation type, the tokens are not assigned this time, that is, the target token count token_c is determined to be 0; if the type is not the starvation type, the reserved token count is assigned, that is, *token_r* is taken as the target token count; the above is the execution logic for the case where the to-be-processed data flow is marked as the starvation mode. If the to-be-processed data flow is not marked as the starvation mode, whether the tokens are assigned for the token request sequence number corresponding to the token event is still determined; if no tokens are assigned for the token request sequence number corresponding to the token event, all the tokens are assigned at one time, that is, *token_r* = *rate* ∗ *token_interval* is taken as the target token count; if tokens are assigned for the token request sequence number corresponding to the token event, whether the event request queue is the queue that has obtained tokens is determined, that is, whether the packet queue type carried in the token event is the queue type that has obtained tokens is determined; if the packet queue type carried in the token event is the queue type that has obtained tokens, the tokens are not assigned this time, that is, the target token count *token_c* is determined to be 0; if the packet queue type carried in the token event is not the queue type that has obtained tokens, the starvation mode and the starvation queue are marked, that is, the to-be-processed data flow is marked as the starvation mode, the packet queue type carried in the token event is marked as the starvation type, and the target token count *token_r* is determined to be 0.

In the above embodiment, the anti-starvation processing mechanism of the algorithm execution module is provided, and the tokens are assigned based on the mechanism, so that the problem that any one of the SQ and the RQ is in a starvation state all the time and thus cannot obtain the token and cannot send the packet can be avoided, and timeliness of packet sending is improved.

It should be understood that, although the steps in the flow charts involved in the above embodiments are shown in sequence as indicated by the arrows, the steps are not necessarily performed in sequence as indicated by the arrows. Unless explicitly stated herein, the steps are not limited to being performed in the exact order and may be performed in other orders. At least part of the steps in the flow charts involved in the above embodiments may include multiple steps or multiple stages, which are not necessarily performed at the same moment, but may be performed at different moments, and the steps or the stages are not necessarily performed in sequence, but may be performed alternately with other steps or at least part of the steps or the stages in other steps.

Based on the same inventive concept, embodiments of the present application further provide a data processing unit for implementing the above packet sending method. The implementation solution for solving problems provided by the data processing unit is similar to the implementation solution described in the above method, and therefore, for the specific definitions in one or more embodiments of the data processing unit provided below, reference can be made to the definitions of the packet sending method in the above description, and the definitions are not repeated herein.

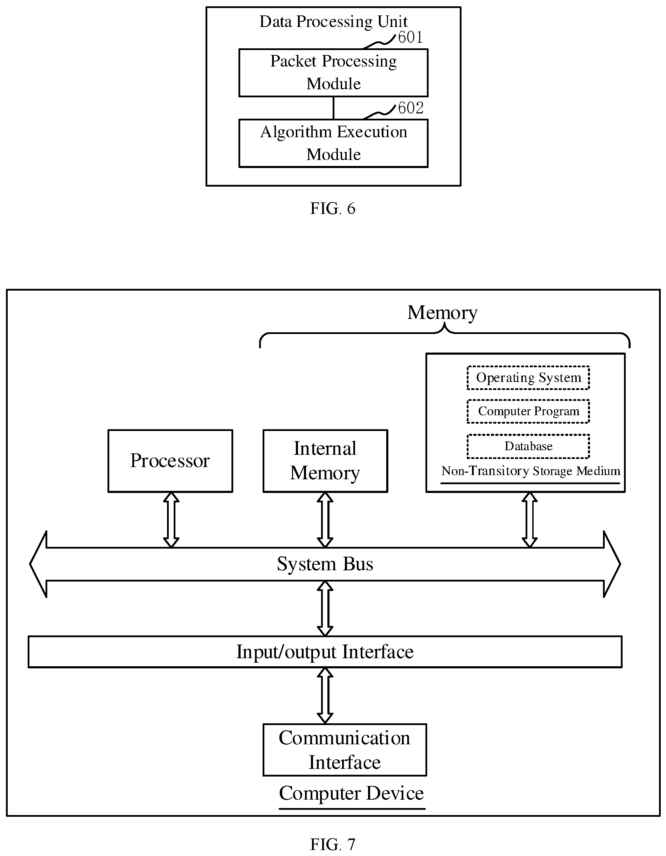

In an exemplary embodiment, as shown in FIG. 6, a data processing unit is provided, including:
a packet processing module 601 configured to send a token event to an algorithm execution module on a condition that a current token count of a to-be-processed data flow is less than a preset threshold value; and
the algorithm execution module 602 configured to parse the token event to obtain a flow identifier of the to-be-processed data flow, and inquire a packet sending rate of the to-be-processed data flow based on the flow identifier; map the packet sending rate into a target token count; and return the target token count to the packet processing module,
the packet processing module 601 being further configured to update the current token count based on the target token count and send a packet corresponding to the to-be-processed data flow based on the current token count.

In some embodiments, the packet processing module 601 is specifically configured to: determine whether the current token count is greater than or equal to the preset threshold value; if the current token count is greater than or equal to the preset threshold value, send a current to-be-sent packet corresponding to the to-be-processed data flow, and update the current token count according to a size of the current to-be-sent packet; determine whether the to-be-processed data flow still has any packet to be sent; return to the step of determining whether the current token count is greater than or equal to the preset threshold value on a condition that the to-be-processed data flow still has a packet to be sent; on a condition that the to-be-processed data flow has no packet to be sent, schedule a next data flow of the to-be-processed data flow in a to-be-scheduled flow queue; and if the current token count is less than the preset threshold value, place the to-be-processed data flow at a tail of the to-be-scheduled flow queue, and wait for next scheduling.

In some embodiments, the packet processing module 601 is further configured to: after sending the current to-be-sent packet corresponding to the to-be-processed data flow, update a single burst packet size according to the size of the current to-be-sent packet; on a condition that the to-be-processed data flow is determined to still have a packet to be sent, further determine whether the single burst packet size reaches an upper limit of a single burst number; if the upper limit is not reached, return to the step of determining whether the current token count is greater than or equal to the preset threshold value; and if the upper limit is reached, schedule the next data flow of the to-be-processed data flow in the to-be-scheduled flow queue.

In some embodiments, the algorithm execution module 602 is specifically configured to: determine a token request sequence number corresponding to the token event based on a token event timestamp carried in the token event, a preset token base timestamp and a token generation interval; determine whether the token request sequence number is greater than a token assigning sequence number; if the token request sequence number is greater than the token assigning sequence number, determine that no tokens are assigned for the token request sequence number, determine the target token count based on the packet sending rate and the token generation interval, and update the token assigning sequence number based on the token request sequence number; and if the token request sequence number is less than or equal to the token assigning sequence number, determine that tokens are assigned for the token request sequence number, and take a preset value as the target token count.

In some embodiments, the algorithm execution module 602 is specifically configured to: determine whether the to-be-processed data flow meets a triggering condition of a time-period-based rate increase adjusting mechanism based on a token event timestamp carried in the token event and the flow identifier of the to-be-processed data flow, and if the triggering condition is met, perform rate increase adjustment on the packet sending rate using the time-period-based rate increase adjusting mechanism; and/or determine, based on a token event timestamp carried in the token event and the flow identifier of the to-be-processed data flow, whether the to-be-processed data flow meets a triggering condition of a rate increase adjusting mechanism based on a sent packet size, and if the triggering condition is met, perform rate increase adjustment on the packet sending rate using the rate increase adjusting mechanism based on the sent packet size.

In some embodiments, the triggering condition of the rate increase adjusting mechanism based on the time period is: $M \times T \leq t = ts _ current - ts _ last _ t _ increase \leq \left(M+1\right) \times T ,$
wherein T is a preset rate increase time period, *ts*_*current* is the token event timestamp, ts_last_t_increase is a timestamp of a last rate increase adjustment performed on the to-be-processed data flow using a first rate increase adjusting mechanism, and M is a positive integer;

The algorithm execution module 602 is specifically configured to: continuously increase the packet sending rate M times by using the rate increase adjusting mechanism based on the time period. In some embodiments, the triggering condition of the rate increase adjusting mechanism based on the sent packet size is: $N \times B \leq b \leq \left(N+1\right) \times B ,$
wherein *B* is a preset rate increase packet size, b is a packet size of the to-be-processed data flow sent between the token event timestamp and a timestamp of a last rate increase adjustment performed on the to-be-processed data flow using a second rate increase adjusting mechanism, and N is a positive integer.

The algorithm execution module 602 is specifically configured to: continuously increase the packet sending rate N times by using the rate increase adjusting mechanism based on the sent packet size.

In some embodiments, the algorithm execution module 602 is specifically configured to: if the to-be-processed data flow is marked as a starvation mode, determine a token request sequence number corresponding to the token event, and determine whether tokens are assigned for the token request sequence number; if no tokens are assigned for the token request sequence number, determine whether a packet queue type carried in the token event is a starvation type, and if the packet queue type is not the starvation type, determine a total token count based on the packet sending rate and a token generation interval, determine an assigned token count from the total token count, and take the assigned token count as the target token count; if the packet queue type is the starvation type, determine the total token count based on the packet sending rate and the token generation interval, take the total token count as the target token count, and cancel a starvation mode mark of the to-be-processed data flow; if tokens are assigned for the token request sequence number, determine whether the packet queue type carried in the token event is the starvation type, and if the packet queue type is not the starvation type, take a preset value as the target token count; and if the packet queue type is the starvation type, cancel the starvation mode mark of the to-be-processed data flow, determine a reserved token count based on the total token count and the assigned token count, and take the reserved token count as the target token count.

In some embodiments, the algorithm execution module 602 is specifically configured to: if the to-be-processed data flow is not marked as the starvation mode, determine the token request sequence number corresponding to the token event, and determine whether tokens are assigned for the token request sequence number; if no tokens are assigned for the token request sequence number, determine the total token count based on the packet sending rate and the token generation interval, and take the total token count as the target token count; if tokens are assigned for the token request sequence number, determine whether the packet queue type carried in the token event is a queue type that has obtained tokens, and if the packet queue type carried in the token event is the queue type that has obtained tokens, take the preset value as the target token count; if the packet queue type carried in the token event is not the queue type that has obtained tokens, mark the to-be-processed data flow as the starvation mode, mark the packet queue type carried in the token event as the starvation type, and take the preset value as the target token count.

The modules in the data processing unit may be wholly or partially implemented by software, hardware and a combination thereof. The modules may be embedded in or independent of a processor in a computer device in hardware, or may be stored in a memory in the computer device in software, such that the processor can conveniently call the modules to execute the operations corresponding to the modules.

In an exemplary embodiment, there is further provided a computer device, including the above data processing unit.

In an exemplary embodiment, a computer device is provided, which may be a server. FIG. 7 is a diagram showing an internal structure of a computer device. The computer device includes a processor, a memory, an input/output (I/O) interface, and a communication interface. The processor, the memory, and the input/output interface are connected through a system bus, and the communication interface is connected to the system bus through the input/output interface. The processor of the computer device is configured to provide computing and control capabilities. The memory of the computer device includes a non-transitory storage medium and an internal memory. The non-transitory storage medium stores an operating system, a computer program, and a database. The internal memory provides an environment for running of the operating system and the computer program in the non-transitory storage medium. The database of the computer device is configured to store data such as a preset threshold value and a packet sending rate. The input/output interface of the computer device is configured to exchange information between the processor and an external device. The communication interface of the computer device is configured to be communicated with an external terminal through a network connection. The data processing unit according to the embodiment of the present application can be used through the communication interface of the computer device. The computer program is executed by the processor to implement a packet sending method.

Those skilled in the art will appreciate that the structure shown in FIG. 7 is only a block diagram of a part of the structure associated with the application solution and does not constitute a limitation on the computer device to which the application solution is applied, and a particular computer device may include more or fewer components than shown components, or combine certain components, or have a different arrangement of components.

In an embodiment, a computer-readable storage medium is provided, having a computer program stored thereon. The computer program, when executed by a processor, implements the following steps:
sending, by the packet processing module, a token event to the algorithm execution module on a condition that a current token count of a to-be-processed data flow is less than a preset threshold value;
parsing, by the algorithm execution module, the token event to obtain a flow identifier of the to-be-processed data flow, and inquiring a packet sending rate of the to-be-processed data flow based on the flow identifier; mapping the packet sending rate into a target token count; and returning the target token count to the packet processing module; and
updating, by the packet processing module, the current token count based on the target token count and sending a packet corresponding to the to-be-processed data flow based on the current token count.

In an embodiment, the computer program, when executed by the processor, also implements the following steps: determining whether the current token count is greater than or equal to the preset threshold value; if the current token count is greater than or equal to the preset threshold value, sending a current to-be-sent packet corresponding to the to-be-processed data flow, and updating the current token count according to a size of the current to-be-sent packet; determining whether the to-be-processed data flow still has any packet to be sent; returning to the step of determining whether the current token count is greater than or equal to the preset threshold value on a condition that the to-be-processed data flow still has a packet to be sent; on a condition that the to-be-processed data flow has no packet to be sent, scheduling a next data flow of the to-be-processed data flow in a to-be-scheduled flow queue; and if the current token count is less than the preset threshold value, placing the to-be-processed data flow at a tail of the to-be-scheduled flow queue, and waiting for next scheduling.

In an embodiment, the computer program, when executed by the processor, also implements the following steps: after sending the current to-be-sent packet corresponding to the to-be-processed data flow, updating a single burst packet size according to the size of the current to-be-sent packet; on a condition that the to-be-processed data flow is determined to still have a packet to be sent, further determining whether the single burst packet size reaches an upper limit of a single burst number; if the upper limit is not reached, returning to the step of determining whether the current token count is greater than or equal to the preset threshold value; and if the upper limit is reached, scheduling the next data flow of the to-be-processed data flow in the to-be-scheduled flow queue.

In an embodiment, the computer program, when executed by the processor, also implements the following steps:
determining a token request sequence number corresponding to the token event based on a token event timestamp carried in the token event, a preset token base timestamp and a token generation interval; determining whether the token request sequence number is greater than a token assigning sequence number; if the token request sequence number is greater than the token assigning sequence number, determining that no tokens are assigned for the token request sequence number, determining the target token count based on the packet sending rate and the token generation interval, and updating the token assigning sequence number based on the token request sequence number; and if the token request sequence number is less than or equal to the token assigning sequence number, determining that tokens are assigned for the token request sequence number, and taking a preset value as the target token count.

In an embodiment, the computer program, when executed by the processor, also implements the following steps: determining whether the to-be-processed data flow meets a triggering condition of a time-period-based rate increase adjusting mechanism based on a token event timestamp carried in the token event and the flow identifier of the to-be-processed data flow, and if the triggering condition is met, performing rate increase adjustment on the packet sending rate using the time-period-based rate increase adjusting mechanism; and/or determining, based on a token event timestamp carried in the token event and the flow identifier of the to-be-processed data flow, whether the to-be-processed data flow meets a triggering condition of a rate increase adjusting mechanism based on a sent packet size, and if the triggering condition is met, performing rate increase adjustment on the packet sending rate using the rate increase adjusting mechanism based on the sent packet size.

In an embodiment, the triggering condition of the rate increase adjusting mechanism based on the time period is: $M \times T \leq t = ts _ current - ts _ last _ t _ increase \leq \left(M+1\right) \times T ,$
wherein T is a preset rate increase time period, *ts*_*current* is the token event timestamp, ts_last_t_increase is a timestamp of a last rate increase adjustment performed on the to-be-processed data flow using a first rate increase adjusting mechanism, and *M* is a positive integer.

The computer program, when executed by the processor, also implements the following step:
continuously increasing the packet sending rate M times by using the rate increase adjusting mechanism based on the time period.

In an embodiment, the triggering condition of the rate increase adjusting mechanism based on the sent packet size is: $N \times B \leq b \leq \left(N+1\right) \times B ,$
wherein *B* is a preset rate increase packet size, b is a packet size of the to-be-processed data flow sent between the token event timestamp and a timestamp of a last rate increase adjustment performed on the to-be-processed data flow using a second rate increase adjusting mechanism, and N is a positive integer.

The computer program, when executed by the processor, also implements the following step:
continuously increasing the packet sending rate N times by using the rate increase adjusting mechanism based on the sent packet size.

In an embodiment, the computer program, when executed by the processor, also implements the following steps:
if the to-be-processed data flow is marked as a starvation mode, determining a token request sequence number corresponding to the token event, and determining whether tokens are assigned for the token request sequence number; if no tokens are assigned for the token request sequence number, determining whether a packet queue type carried in the token event is a starvation type, and if the packet queue type is not the starvation type, determining a total token count based on the packet sending rate and a token generation interval, determining an assigned token count from the total token count, and taking the assigned token count as the target token count; if the packet queue type is the starvation type, determining the total token count based on the packet sending rate and the token generation interval, taking the total token count as the target token count, and canceling a starvation mode mark of the to-be-processed data flow; if tokens are assigned for the token request sequence number, determining whether the packet queue type carried in the token event is the starvation type, and if the packet queue type is not the starvation type, taking a preset value as the target token count; and if the packet queue type is the starvation type, canceling the starvation mode mark of the to-be-processed data flow, determining a reserved token count based on the total token count and the assigned token count, and taking the reserved token count as the target token count.

In an embodiment, the computer program, when executed by the processor, also implements the following steps:
if the to-be-processed data flow is not marked as the starvation mode, determining the token request sequence number corresponding to the token event, and determining whether tokens are assigned for the token request sequence number; if no tokens are assigned for the token request sequence number, determining the total token count based on the packet sending rate and the token generation interval, and taking the total token count as the target token count; if tokens are assigned for the token request sequence number, determining whether the packet queue type carried in the token event is a queue type that has obtained tokens, and if the packet queue type carried in the token event is the queue type that has obtained tokens, taking the preset value as the target token count; if the packet queue type carried in the token event is not the queue type that has obtained tokens, marking the to-be-processed data flow as the starvation mode, marking the packet queue type carried in the token event as the starvation type, and taking the preset value as the target token count.

In an embodiment, a computer program product is provided, including a computer program. The computer program, when executed by a processor, implements the packet sending method according to the above embodiments.

It will be understood by those skilled in the art that all or part of the processes of the method according to the embodiments described above may be implemented by a computer program instructing related hardware, and the computer program may be stored in a non-transitory computer-readable storage medium, and when executed, may include the processes of the embodiments of the method described above. Any reference to memories, databases or other media used in the embodiments of the present application can include at least one of a non-transitory memory and a transitory memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, or the like. The transitory memory can include a random access memory (RAM), an external cache memory, or the like. By way of illustration and not limitation, the RAM can take many forms such as a static random access memory (SRAM) and a dynamic random access memory (DRAM). The databases involved in the embodiments of the present application may include at least one of relational and non-relational databases. The non-relational database may include, but is not limited to, a block chain-based distributed database, or the like. The processors referred to in the embodiments of the present application may include, but are not limited to, general processors, central processors, graphics processors, digital signal processors, programmable logic units, data processing logic units based on quantum calculations, or the like.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the protection scope of the present application should be subject to the appended claims.

## Claims

1. A packet sending method, applied to a data processing unit, the data processing unit comprising a packet processing module and an algorithm execution module, and the method comprising:
sending, by the packet processing module, a token event to the algorithm execution module on a condition that a current token count of a to-be-processed data flow is less than a preset threshold value;
parsing, by the algorithm execution module, the token event to obtain a flow identifier of the to-be-processed data flow, and inquiring a packet sending rate of the to-be-processed data flow based on the flow identifier; mapping the packet sending rate into a target token count; and returning the target token count to the packet processing module; and
updating, by the packet processing module, the current token count based on the target token count and sending a packet corresponding to the to-be-processed data flow based on the current token count.

2. The method according to claim 1, wherein sending the packet corresponding to the to-be-processed data flow based on the current token count comprises:
determining whether the current token count is greater than or equal to the preset threshold value;
if the current token count is greater than or equal to the preset threshold value, sending a current to-be-sent packet corresponding to the to-be-processed data flow, and updating the current token count according to a size of the current to-be-sent packet; determining whether the to-be-processed data flow still has any packet to be sent; returning to the step of determining whether the current token count is greater than or equal to the preset threshold value on a condition that the to-be-processed data flow still has a packet to be sent; and on a condition that the to-be-processed data flow has no packet to be sent, scheduling a next data flow of the to-be-processed data flow in a to-be-scheduled flow queue; and
if the current token count is less than the preset threshold value, placing the to-be-processed data flow at a tail of the to-be-scheduled flow queue, and waiting for next scheduling.

3. The method according to claim 2, further comprising:
updating a single burst packet size according to the size of the current to-be-sent packet; and
on a condition that the to-be-processed data flow is determined to still have a packet to be sent, further determining whether the single burst packet size reaches an upper limit of a single burst number; if the upper limit is not reached, returning to the step of determining whether the current token count is greater than or equal to the preset threshold value; and if the upper limit is reached, scheduling the next data flow of the to-be-processed data flow in the to-be-scheduled flow queue.

4. The method according to claim 1, wherein mapping the packet sending rate into the target token count comprises:
determining a token request sequence number corresponding to the token event based on a token event timestamp carried in the token event, a preset token base timestamp and a token generation interval;
determining whether the token request sequence number is greater than a token assigning sequence number;
if the token request sequence number is greater than the token assigning sequence number, determining that no tokens are assigned for the token request sequence number, determining the target token count based on the packet sending rate and the token generation interval, and updating the token assigning sequence number based on the token request sequence number; and
if the token request sequence number is less than or equal to the token assigning sequence number, determining that tokens are assigned for the token request sequence number, and taking a preset value as the target token count.

5. The method according to claim 1, wherein before mapping the packet sending rate into the target token count, further comprising:
determining whether the to-be-processed data flow meets a triggering condition of a time-period-based rate increase adjusting mechanism based on a token event timestamp carried in the token event and the flow identifier of the to-be-processed data flow, and if the triggering condition is met, performing rate increase adjustment on the packet sending rate using the time-period-based rate increase adjusting mechanism.

6. The method according to claim 1, wherein before mapping the packet sending rate into the target token count, further comprising:
determining, based on a token event timestamp carried in the token event and the flow identifier of the to-be-processed data flow, whether the to-be-processed data flow meets a triggering condition of a rate increase adjusting mechanism based on a sent packet size, and if the triggering condition is met, performing rate increase adjustment on the packet sending rate using the rate increase adjusting mechanism based on the sent packet size.

7. The method according to claim 5, wherein the triggering condition of the time-period-based rate increase adjusting mechanism is: $M \times T \leq t = ts _ current - ts _ last _ t _ increase \leq \left(M+1\right) \times T ,$ wherein T is a preset rate increase time period, *ts*_*current* is the token event timestamp, *ts_last_t_increase* is a timestamp of a last rate increase adjustment performed on the to-be-processed data flow using a first rate increase adjusting mechanism, and *M* is a positive integer.

8. The method according to claim 7, wherein performing rate increase adjustment on the packet sending rate using the time-period-based rate increase adjusting mechanism comprises:
continuously increasing the packet sending rate M times by using the time-period-based rate increase adjusting mechanism.

9. The method according to claim 6, wherein the triggering condition of the rate increase adjusting mechanism based on the sent packet size is: $N \times B \leq b \leq \left(N+1\right) \times B ,$ wherein *B* is a preset rate increase packet size, b is a packet size of the to-be-processed data flow sent between the token event timestamp and a timestamp of a last rate increase adjustment performed on the to-be-processed data flow using a second rate increase adjusting mechanism, and *N* is a positive integer.

10. The method according to claim 9, wherein performing rate increase adjustment on the packet sending rate using the rate increase adjusting mechanism based on the sent packet size comprises:
continuously increasing the packet sending rate N times by using the rate increase adjusting mechanism based on the sent packet size.

11. The method according to claim 1, wherein mapping the packet sending rate into the target token count comprises:
if the to-be-processed data flow is marked as a starvation mode, determining a token request sequence number corresponding to the token event, and determining whether tokens are assigned for the token request sequence number;
if no tokens are assigned for the token request sequence number, determining whether a packet queue type carried in the token event is a starvation type, and if the packet queue type is not the starvation type, determining a total token count based on the packet sending rate and a token generation interval, determining an assigned token count from the total token count, and taking the assigned token count as the target token count; and if the packet queue type is the starvation type, determining the total token count based on the packet sending rate and the token generation interval, taking the total token count as the target token count, and canceling a starvation mode mark of the to-be-processed data flow; and
if tokens are assigned for the token request sequence number, determining whether the packet queue type carried in the token event is the starvation type, and if the packet queue type is not the starvation type, taking a preset value as the target token count; and if the packet queue type is the starvation type, canceling the starvation mode mark of the to-be-processed data flow, determining a reserved token count based on the total token count and the assigned token count, and taking the reserved token count as the target token count.

12. The method according to claim 11, further comprising:
if the to-be-processed data flow is not marked as the starvation mode, determining the token request sequence number corresponding to the token event, and determining whether tokens are assigned for the token request sequence number;
if no tokens are assigned for the token request sequence number, determining the total token count based on the packet sending rate and the token generation interval, and taking the total token count as the target token count; and
if tokens are assigned for the token request sequence number, determining whether the packet queue type carried in the token event is a queue type that has obtained tokens, and if the packet queue type carried in the token event is the queue type that has obtained tokens, taking the preset value as the target token count; if the packet queue type carried in the token event is not the queue type that has obtained tokens, marking the to-be-processed data flow as the starvation mode, marking the packet queue type carried in the token event as the starvation type, and taking the preset value as the target token count.

13. A data processing unit, comprising:
a packet processing module configured to send a token event to an algorithm execution module on a condition that a current token count of a to-be-processed data flow is less than a preset threshold value; and
the algorithm execution module configured to parse the token event to obtain a flow identifier of the to-be-processed data flow, and inquire a packet sending rate of the to-be-processed data flow based on the flow identifier; map the packet sending rate into a target token count; and return the target token count to the packet processing module,
the packet processing module further configured to update the current token count based on the target token count and send a packet corresponding to the to-be-processed data flow based on the current token count.

14. A computer device comprising the data processing unit according to claim 13.

15. A computer-readable storage medium having a computer program stored thereon, wherein the computer program, when executed by a processor, implements the steps of the method according to any one of claims 1 to 12.

16. A computer program product comprising a computer program, wherein the computer program, when executed by a processor, implements the steps of the method according to any one of claims 1 to 12.
